# Europäisches Patentamt
## European Patent Office
## Office européen des brevets

(19)

(11) Veröffentlichungsnummer: **0 310 151 B1**

(12)

# EUROPÄISCHE PATENTSCHRIFT

(45) Veröffentlichungstag der Patentschrift: **03.06.92**

(51) Int. Cl.⁵: **B01D 53/34**, B05B 3/10

(21) Anmeldenummer: **88201612.4**

(22) Anmeldetag: **26.07.88**

(54) **Vorrichtung zur Abscheidung gasförmiger Schadstoffe aus Abgasen.**

(30) Priorität: **25.09.87 DE 3732353**

(43) Veröffentlichungstag der Anmeldung:
**05.04.89 Patentblatt 89/14**

(45) Bekanntmachung des Hinweises auf die
Patenterteilung:
**03.06.92 Patentblatt 92/23**

(84) Benannte Vertragsstaaten:
**AT CH DE ES FR IT LI**

(56) Entgegenhaltungen:
**EP-A- 0 109 224**
**EP-A- 0 142 377**
**WO-A-87/01963**
**DE-A- 3 135 721**
**US-A- 4 246 242**

(73) Patentinhaber: **METALLGESELLSCHAFT AG**
**Reuterweg 14 Postfach 3724**
**W-6000 Frankfurt/M.1(DE)**

(72) Erfinder: **Jury, Egon**
**W.-Borchert-Strasse 16**
**W-6073 Egelsbach(DE)**

Rank Xerox (UK) Business Services

## Beschreibung

Die Erfindung bezieht sich auf eine Vorrichtung zur Behandlung eines Abgasstroms in einem Sprühabsorber, wobei der Abgasstrom durch Einbringen von Wasser auf eine geeignete Temperatur abgekühlt und wobei gasförmige Schadstoffe, wie $SO_2$, HCl, HF usw., durch Einbringen von in einer Flüssigkeit aufgeschlämmten Reaktionsmittteln gebunden und in Form von Partikeln mittels elektrostatischem Staubabscheider oder dergl. aus dem Abgasstrom abgetrennt werden.

Die gattungsmäßige Vorrichtung dient der Abgasreinigung, wobei insbesondere Abgase aus Müllverbrennungsanlagen hohe Schadgasanteile, wie $SO_2$, HCl, HF usw., aufweisen. Dazu werden häufig Kalk oder kalkhaltige Mittel eingesetzt, die fein vermahlen und meist in Wasser aufgeschlämmt sind. Sie werden als sogenannte Kalkmilch fein verdüst in den Abgasstrom eingesprüht. Vorrichtungen zum Eintragen von Absorptionsmitteln für die sauren Schadgasanteile der Abgase von Verbrennungsanlagen sind aus EP-A-0 142 377, US-A-4 246 242 oder EP-A-0 109 224 bekannt. Im allgemeinen geht man so vor, daß die Feststoffkonzentration in der Kalkmilch konstant gehalten wird und daß der Bedarf an Reaktionsmitteln über die zugegebene Kalkmilchmenge geregelt wird. Vielfach soll der Sprühabsorber aber noch eine zweite Funktion erfüllen, nämlich den Abgasstrom unabhängig von der Kalkmilchzugabe auf eine bestimmte Temperatur herunterzukühlen, weil die Reaktionsmittel bei tieferen Temperaturen besser ausgenutzt werden. Dazu wird nach dem Stand der Technik dem Kalkmilchstrom Kühlwasser zugemischt, dessen Menge in Abhängigkeit von dem jeweiligen Kühlbedarf geregelt wird.

Bei dieser Verfahrensweise hat man festgestellt, daß die Kalkmilch zum Teil bereits mit den Härtebildnern des Wassers reagiert und die dabei entstehenden Reaktionsprodukte sich als Ablagerungen in der Zuführleitung und im Rotations-Zerstäuber absetzen, wodurch zunächst die Regelung und im weiteren Verlauf auch die Funktion der gesamten Anlage gestört wird.

Aus EP-A-0 109 224 ist zwar die Möglichkeit des getrennten Einbringens von Flüssigkeiten bekannt, aber die vorgeschlagene Vorrichtung erlaubt nur eine ineffektive Zuführung des zu behandelnden Gasstroms.

Es besteht somit die Aufgabe, beim Einbringen der verschiedenen Behandlungsmittel in einen zur Abgasreinigung eingesetzten Sprühabsorber für eine möglichst ungestörte kontinuierliche Betriebsweise zu sorgen, ohne daß eine zusätzliche Wasseraufbereitung erforderlich wird oder das Gesamtverfahren aus anderen Gründen unwirtschaftlich wird.

Überraschenderweise hat sich herausgestellt, daß die geschilderten Nachteile verhältnismäßig einfach dadurch zu vermeiden sind, daß das Wasser und die in einer Flüssigkeit aufgeschlämmten Reaktionsmittel über getrennte Leitungen und Verteileinrichtungen in eine Rotations-Zerstäuberscheibe eingebracht, darin gemischt und gemeinsam in den Abgasstrom eingesprüht werden. Die kurze gemeinsame Verweilzeit im Aufnahmeteil der Zerstäuberscheibe und die dort herrschenden Strömungsverhältnisse gewährleisten, daß die beim Vermischen des Wassers mit den aufgeschlämmten Reaktionsmitteln sich bildenden Reaktionsprodukte keine Möglichkeit haben, sich auf dem gemeinsamen Restweg bis zum Eintritt in den Gasstrom irgendwo abzusetzen. Soweit die genannten Reaktionen innerhalb der verhältnismäßig kurzen Zeit überhaupt ablaufen, sind die Reaktionsprodukte in einen stark beschleunigten Gemischstrom eingebunden, der nicht zuletzt auch wegen der darin enthaltenen Feststoffpartikel in dem kurzen verbleibenden gemeinsamen Strömungsweg stark erodierend wirkt, so daß sich jedenfalls in den für die Strömung benötigten Bereichen keine Ablagerungen bilden können. Soweit diese in Strömungstoträumen entstehen, können sie die Funktion der Einrichtung nicht behindern.

Eine Vorrichtung, die die o.g. Aufgabe löst, besteht aus einem Sprühabsorber mit im Deckenbereich zentral angeordnetem Rotations-Zerstäuber mit vertikaler Drehachse, einer konzentrisch dazu angeordneten Gaszuführöffnung sowie einem unten angeschlossenen Gasabzugskanal und ist dadurch gekennzeichnet, daß oberhalb einer üblichen Zerstäuberscheibe mit Aufnahmeteil und horizontalen Austrittsbohrungen zwei oder mehrere Einrichtungen für das getrennte Einspeisen von Behandlungsmittel in den Aufnahmeteil der Zerstäuberscheibe angeordnet sind.

Die Einrichtungen können aus einzelnen, voneinander getrennten Kammern bestehen, die je mit einer Zuführleitung verbunden sind und im Bodenbereich wenigstens eine Öffnung zum Aufnahmeteil der Zerstäuberscheibe aufweisen oder aus einer konzentrisch zur Drehachse angeordneten kreisförmigen Kammer bestehen, die durch Wände in einzelne Abteilungen unterteilt ist, von denen jede mit einer Zuführeinrichtung verbunden und mit wenigstens einer Bodenöffnung versehen ist. Dabei kann es zweckmäßig sein, zur Verbesserung der Vermischung die Wände entweder radial, spiralförmig oder konzentrisch anzuordnen.

Weitere Einzelheiten der Erfindung werden anhand des in den Figuren dargestellten Ausführungsbeispiels näher erläutert.

Fig. 1    zeigt eine Übersichtsskizze zum erfindungsgemäßen Verfahren.

Fig. 2    zeigt eine Zerstäuberscheibe mit darüber angeordneten Zuführeinrichtungen im Schnitt.

Fig. 3    zeigt verschiedene Anordnungsmöglichkeiten der Trennwände in einer kreisringförmigen Zufuhrkammer.

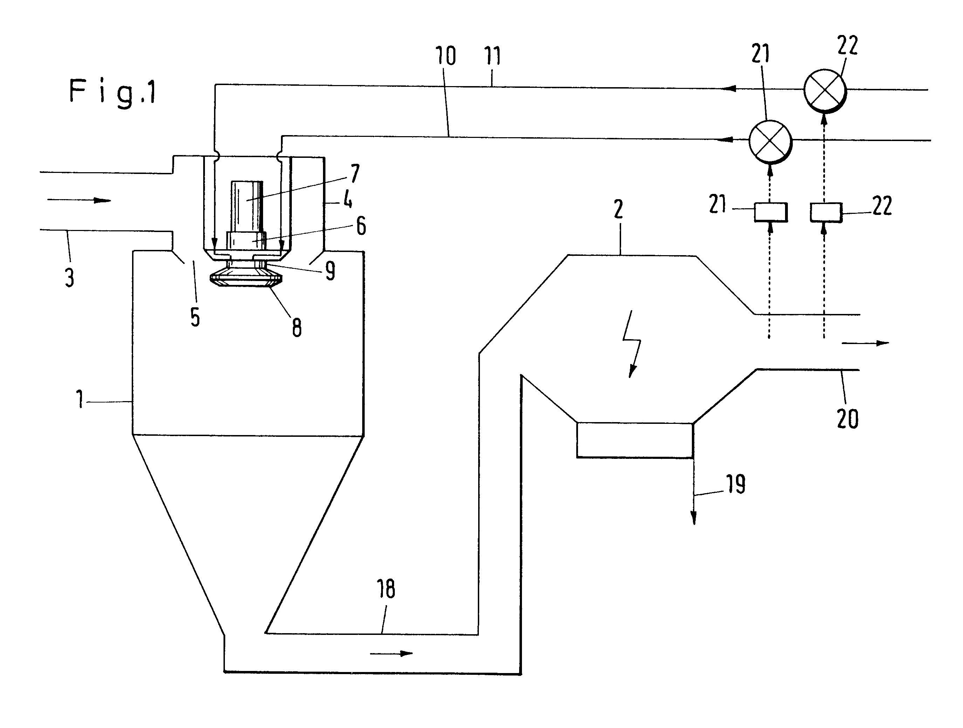

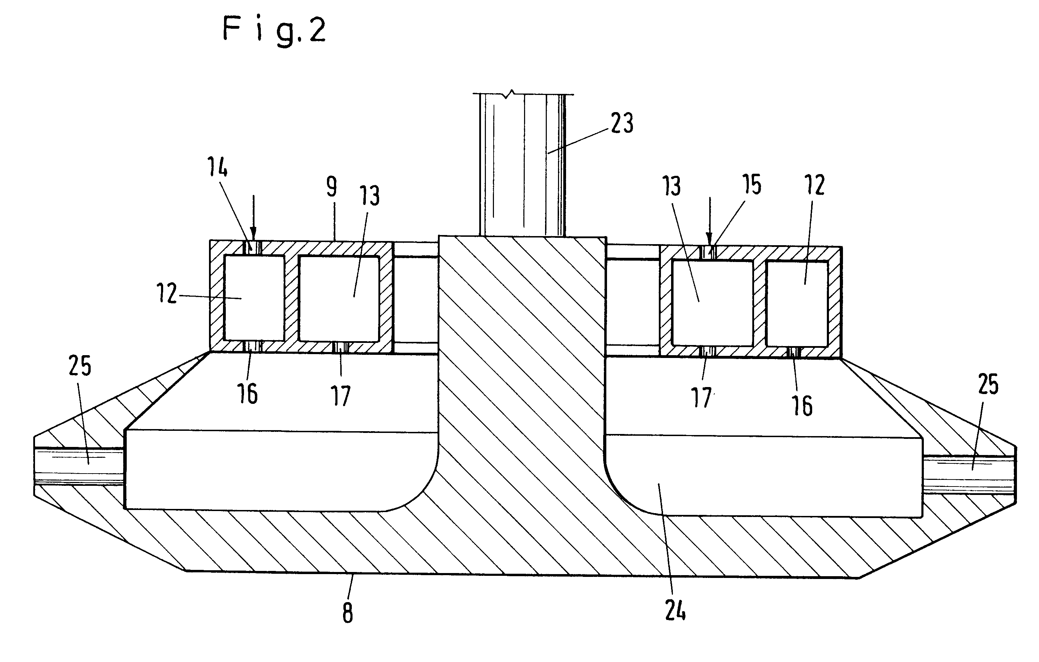

In Figur 1 ist schematisch und stark vereinfacht als Ausführungsbeispiel eine Einrichtung zur Behandlung eines Abgasstromes dargestellt. Sie besteht im wesentlichen aus einem Sprühabsorber (1) und einem elektrostatischen Staubabscheider (2). Das Abgas wird dem Sprühabsorber (1) über die Leitung (3) zugeführt. Es wird im Aufsatz (4) umgelenkt und mit Drall durch die zylindrische Gaszuführungsöffnung (5) in die Hauptkammer des Sprühabsorbers (1) eingebracht. Im Deckenbereich des Sprühabsorbers (1) ist zentrisch ein Rotations-Zerstäuber (6) mit außenliegendem Antrieb (7) angeordnet. Oberhalb der Zerstäuberscheibe (8) ist eine nicht mitdrehende Einrichtung (9) angeordnet, in die über die Leitungen (10 und 11) verschiedene Behandlungsmittel eingebracht werden können. Die Einrichtung (9) kann beispielsweise aus zwei konzentrisch angeordneten Ringkanälen (12,13) (Fig.2) bestehen, die oben je eine Eintrittsöffnung (14,15) und unten eine oder mehrere Austrittsöffnungen (16,17) aufweisen.

Im Sprühabsorber (1) wird das Abgas mit den über die Zerstäuberscheibe (8) eingebrachten Behandlungsmitteln gemischt, wobei gasförmige Schadstoffe an die Reaktionsmittel gebunden werden. Das Abgas verläßt den Sprühabsorber (1) über die Leitung (18) und wird dann in den elektrostatischen Staubabscheider (2) eingeleitet, wo die Schadstoffe in Partikelform abgeschieden und über die Leitung (19) aus dem System ausgeschleust werden. In der Leitung (20) werden Temperatur und Rest-Schadstoffgehalt des gereinigten Abgases gemessen. Entsprechend den Meßergebnissen wird die Zugabe der Behandlungsmittel über die Regeleinrichtungen (21,22) eingestellt, wobei sich die Menge der aufgeschlämmten Reaktionsmittel nach dem Rest-Schadstoffgehalt richtet, während die Wasserzugabe nach der Temperatur geregelt wird.

In Figur 2 ist eine Zerstäuberscheibe (8) im Schnitt vergrößert dargestellt. Sie wird mittels der senkrechten Welle (23) durch einen nicht dargestellten Antrieb in Rotation versetzt. Über die nicht mitdrehende Einrichtung (9) mit den zwei Ringkanälen (12,13) werden die Behandlungsmittel in den Aufnahmeteil (24) der Zerstäuberscheibe (8) eingebracht und darin gemischt. Die Mischung wird über die Bohrungen (25) der Zerstäuberscheibe (8) abgeschleudert und dadurch feinverteilt mit dem Gasstrom gemischt. Chemische Reaktionen der Behandlungsmittel untereinander können wegen der kurzen Wege und der intensiven Bewegung im Aufnahmeteil (24) und in den Bohrungen (25) keine nachteiligen Folgen, wie Anbackungen und Verkrustungen, verursachen.

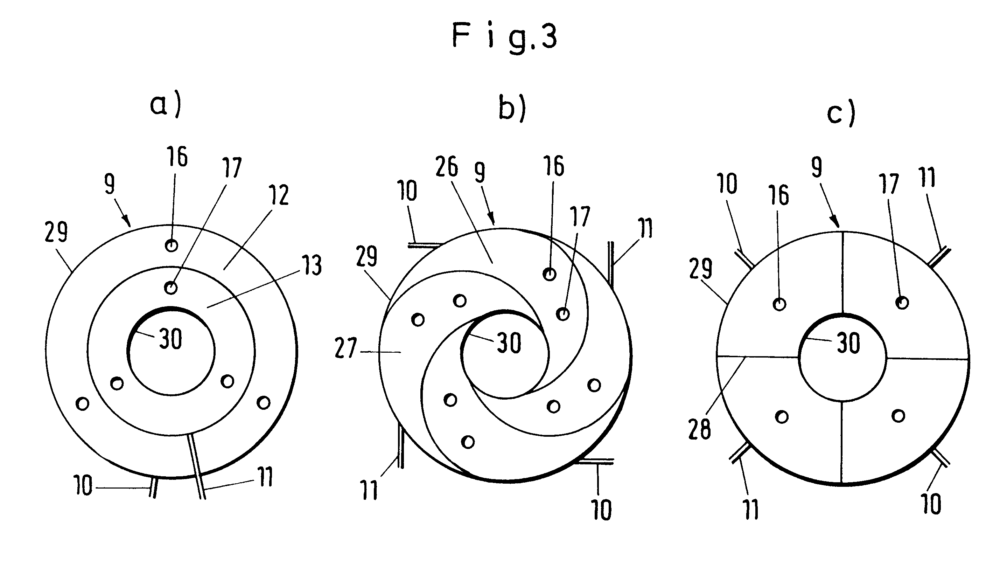

In Figur 3 sind drei Ausführungsbeispiele a, b und c für die Gestaltung der Einrichtung (9) dargestellt, die jeweils von einer äußeren zylindrischen Wand (29) und einer inneren zylindrischen Wand (30) begrenzt ist. Der Ringraum kann durch eine konzentrische Wand in zwei Ringkanäle (12,13) (Ausführung a) unterteilt sein, die über Leitungen (10,11) getrennt mit Wasser und aufgeschlämmtem Reaktionsmittel beschickt werden und ihren Inhalt über die Austrittsöffnungen (16,17) in die Zerstäuberscheibe (8) (nicht dargestellt) abgeben.

Bei der Ausführung b ist der Ringraum zwischen den Wänden (29,30) durch halbkreisförmige Wände in Kanäle (26,27) unterteilt, während bei der Ausführung c radiale Wände (28) vorgesehen sind. Bei beiden Ausführungen sind die Leitungen wieder mit 10 und 11 und die Austrittsöffnungen mit 16 und 17 bezeichnet.

**Patentansprüche**

1.    Vorrichtung zur Behandlung eines Abgasstromes in einem Sprühabsorber (1), wobei der Abgasstrom durch Einbringen von Wasser auf eine geeignete Temperatur gekühlt und wobei gasförmige Schadstoffe, wie $SO_2$, $HCl$, $HF$ usw., durch Einbringen von in einer Flüssigkeit aufgeschlämmten Reaktionsmitteln gebunden werden und in Form von Partikeln mittels nachgeschaltetem elektrostatischem Staubabscheider (2) oder dergl. aus dem Abgasstrom abgetrennt werden, wobei die Vorrichtung aus einem Sprühabsorber (1) mit im Deckenbereich zentral angeordnetem Rotations-Zerstäuber (6) mit vertikaler Drehachse, einer konzentrisch dazu angeordneten Gaszuführöffnung (4) sowie einem unten angeschlossenen Gasabzugskanal (5) besteht, dadurch gekennzeichnet, daß oberhalb der Zerstäuberscheibe (8) mit Aufnahmeteil und horizontalen Austrittsbohrungen zwei oder mehrere nicht mitdrehende Einrichtungen (9) für das getrennte Einspeisen von Behandlungsmitteln in den Aufnahmeteil der Zerstäuberscheibe (8) angeordnet sind.

2.    Vorrichtung nach Anspruch 1, dadurch gekennzeichnet, daß die Einrichtungen (9) aus einzelnen voneinander getrennten Kammern (12, 13) bestehen, die je mit einer Zuführleitung (10, 11) verbunden sind und im Bodenbereich wenigstens je eine Öffnung (16, 17) zum Aufnahmeteil der Zerstäuberscheibe (8) aufweisen.

3.    Vorrichtung nach Anspruch 1, dadurch gekennzeichnet, daß die Einrichtung (9) aus einer konzentrisch zur Drehachse (23) angeordneten kreisringförmigen Kammer besteht, die durch Wände in einzelne Abteilungen (12, 13) unterteilt ist, von denen jede mit einer Zuführleitung (10, 11) verbunden und mit wenigstens einer Bodenöffnung (16, 17) versehen ist.

4. Vorrichtung nach Anspruch 3, dadurch gekennzeichnet, daß die Wände (29, 30) radial (28), spiralförmig (26, 27) oder konzentrisch (12, 13) angeordnet sind.

## Claims

1. An apparatus for treating an exhaust gas stream in a spray absorber (1), wherein the exhaust gas stream is cooled to a suitable temperature by an introduction of water, gaseous pollutants, such as $SO_2$, HCl, HF, etc. are bound by an introduction of reactants suspended in a liquid and are removed from the exhaust gas stream in the form of particles by means of a succeeding dedusting electrostatic precipitator (2) or the like, and the apparatus comprises a spray absorber (1) comprising a rotary atomizer (6), which is centrally disposed adjacent to the too of the absorber and has a vertical axis of rotation, a gas supply opening (4), which is concentric to the atomizer, and a gas discharge passage (5) connected to the bottom of the spray absorber, characterized in that two or more not-corotating means (9) for separately feeding treating agents into the receiving portion of the atomizer disk (8) are provided above the atomizer disk (8), which comprises a receiving portion and horizontal outlet bares.

2. An apparatus according to claim 1, characterized in that the means (9) consist of individual chambers (12, 13), which are separate from each other and are connected each to a supply line (10, 11) and each of said chambers has adjacent to its bottom at least one opening (16, 17) leading to the receiving portion of the atomizer disk (8).

3. An apparatus according to claim 1, characterized in that the means (9) consist of a chamber, which has the shape of a circular ring and is concentric to the axis of rotation (23) and is divided by walls into separate compartments (12, 13), each of which is connected to a supply line (10, 11) and is provided with at least one bottom opening (15, 17).

4. An apparatus according to claim 3, characterized in that the walls (29, 30) are radially (28), spirally (25, 27) or concentrically (12, 13) arranged.

## Revendications

1. Installation de traitement d'un courant d'effluent gazeux dans un absorbeur à pulvérisation (1), qui consiste à refroidir le courant d'effluent gazeux à une température convenable par introduction d'eau, et à fixer les matières polluantes gazeuses comme $SO_2$, HCl, HF, etc., par introduction d'agents de réaction en suspension dans un liquide et à les séparer sous la forme de particules au moyen d'un séparateur de poussière (2) électrostatique monté en aval ou analogue, du courant d'effluent gazeux, l'installation étant constituée d'un absorbeur à pulvérisation (1) comprenant un pulvérisateur (6) à rotation qui est disposé au centre, dans la région du couvercle, et qui a un axe de rotation vertical, d'une ouverture d'amenée du gaz (4) disposée concentriquement à ce pulvérisateur, ainsi que d'un canal d'évacuation du gaz (5) raccordé par le bas, caractérisée en ce qu'au-dessus du disque du pulvérisateur (8), ayant une partie de réception et des perçages horizontaux de sortie, sont disposés deux ou plusieurs dispositifs (9), qui ne sont pas entraînés en rotation et qui sont destinés à envoyer, de manière distincte, des agents de traitement dans la partie de réception du disque du pulvérisateur (8).

2. Installation suivant la revendication 1, caractérisée en ce que les dispositifs (9) sont constitués de chambres (12, 13), individuelles, distinctes les unes des autres, qui communiquent chacune avec un conduit d'amenée (10, 11) et qui comportent dans la partie du fond au moins respectivement une ouverture (16, 17) tournée vers la partie de réception du disque du pulvérisateur (8).

3. Installation suivant la revendication 1, caractérisée en ce que le dispositif (9) est constitué d'une chambre en forme d'anneau circulaire, qui est disposée concentriquement à l'axe de rotation (23) et qui est subdivisée par des parois en des compartiments (12, 13) individuels, chacun d'entre eux communiquant avec un conduit d'amenée (10, 11) et étant muni d'au moins une ouverture de fond (16, 17).

4. Installation suivant la revendication 3, caractérisée en ce que les parois (29, 30) sont disposées radialement (28), en forme de spirale (26, 27) ou concentriquement (12, 13).

Fig.1

EP 0 310 151 B1

Fig.2

# Fig.3

a)

b)

c)

EP 0 310 151 B1